Europäisches Patentamt

European Patent Office

Office européen des brevets

(19)

(11) Veröffentlichungsnummer: **0 273 510**
**A2**

(12) ## EUROPÄISCHE PATENTANMELDUNG

(21) Anmeldenummer: **87202515.0**

(22) Anmeldetag: **15.12.87**

(51) Int. Cl.⁴: **G11B 17/04 , G11B 17/035**

(30) Priorität: **20.12.86 DE 3643779**

(43) Veröffentlichungstag der Anmeldung:
**06.07.88 Patentblatt 88/27**

(84) Benannte Vertragsstaaten:
**DE FR GB IT**

(71) Anmelder: **Philips Patentverwaltung GmbH**
**Wendenstrasse 35 Postfach 10 51 49**
**D-2000 Hamburg 1(DE)**

(84) **DE**

(71) Anmelder: **N.V. Philips' Gloeilampenfabrieken**
**Groenewoudseweg 1**
**NL-5621 BA Eindhoven(NL)**

(84) **FR GB IT**

(72) Erfinder: **Verhagen, Hans**
**Meidoornstraat 12**
**NL-6020 XE Maarheeze(NL)**
Erfinder: **Deutsch, Armin**
**Berliner Ring 109**
**D-6330 Wetzlar(DE)**

(74) Vertreter: **Kupfermann, Fritz-Joachim,**
**Dipl.-Ing. et al**
**Philips Patentverwaltung GmbH**
**Wendenstrasse 35 Postfach 10 51 49**
**D-2000 Hamburg 1(DE)**

(54) **Gerät zum Aufnehmen und oder Wiedergeben von Signalen auf Informationsplatten mit einem lichtoptischen Einschreibe- und/oder Ausleseaggregat.**

(57) Die Erfindung bezieht sich auf ein Gerät zum Aufnehmen und/oder Wiedergeben von Signalen auf Informationsplatten (2) mit einem lichtoptischen Einschreibe-oder Ausleseaggregat (54), mit einem Drehteller (53) für die Informationsplatte (2), mit einem - schwenkbar angeordneten Plattenandrücker (55) und einem Lademechanismus (6). Der Lademechanismus (6) dient dazu, die Platte (2) in das Gerät (3) einzuschieben und in Betriebslage auf den Drehteller (53) zu überführen. Weiterhin soll der Lademechanismus die Platte (2) zwischen Plattenandrücker (55) und Drehteller (53) zentrieren und festklemmen. Der Drehteller (53) und der Plattenandrücker (55) sind an einem Subchassis (50) angeordnet, das von einem Hauptchassis (4) getragen wird. Das Subchassis (50) mit dem Aggregat (54) und dem Drehteller (53) ist im Hauptchassis (4) um eine Schwenkachse (51a) schwenkbar, wobei die Schwenkachse (51a) etwa parallel zur Einschieberichtung (10) verläuft und die Schwenkbewegung des Subchassis (50) von dem Lademechanismus (6) gesteuert wird.

FIG.1

## Gerät zum Aufnehmen und/oder Wiedergeben von Signalen auf Informationsplatten mit einem lichtoptischen Einschreibe-und/oder Ausleseaggregat

Die Erfindung bezieht sich auf ein Gerät zum Aufnehmen und/oder Wiedergeben von Signalen auf Informationsplatten mit einem lichtoptischen Einschreibe-und/oder Ausleseaggregat, mit einem Drehteller für die Informationsplatte, mit einem - schwenkbar angeordneten Plattenandrücker und einem Lademechanismus, um die Platte in das Gerät einzuschieben und in Betriebslage auf den Drehteller zu führen und den Platteandrücker gegen die Platte zu drücken, wobei das Aggregat, der Drehteller und der Plattenandrücker an einem Subchassis angeordnet sind, das von einem Hauptchassis getragen wird.

Ein derartiger Plattenspieler ist aus der EP-A-145 052 bekannt. Dieses Gerät hat ein lichtoptisches Ausleseaggregat, das eine auf einem Drehteller umlaufende Informationsplatte, insbesondere CD-Platte, ausliest. Die Platte wird auf dem Drehteller mittels eines schwenkbar angeordneten Plattenandrückers festgehalten. Es ist ein Lademechanismus vorgesehen, um die Platte in das Gerät einzuschieben und in Betriebslage auf den Drehteller zu führen. Der Lademechanismus des bekannten Gerätes ist so gestaltet, daß der Ladevorgang in einer gleichbleibenden Einzugsrichtung vonstatten geht. In dieser einen Richtung, d. h. der Einschiebrichtung wird die Platte, gesteuert von einer Servostange, in das Gerät eingezogen. Am Ende der Einzugbewegung läuft die Servostange in der Einzugrichtung weiter und bewirkt bei dieser fortlaufenden Bewegung das Positionieren der Platten zwischen Drehteller und Plattenandrücker. Wegen der verschiedenen Steuervorgänge während des Bewegungsablaufes der Servostange führt diese eine relativ lange Bewegung aus. Damit vergrößert sich die Einbautiefe des Gerätes. Dies kann für Geräte, die beispielsweise zum Einbau in Kraftfahrzeuge gedacht sind, störend oder zu lang sein.

Es ist darüber hinaus aus der EP-Patentanmeldung 185 140 bekannt, den Drehteller eines CD-Spielers um eine Achse schwenkbar zu machen, und beim Schwenken wird der Drehteller von unten her gegen die über eine Schublade eingeschobene Platte gefahren. Die Schwenkachse liegt am hinteren Ende des Gerätes quer zur Einschubrichtung. nachteilig ist dabei, daß die Bautiefe des Gerätes erhöht wird und daß sich die Bauhöhe zusätzlich durch die Schublade vergrößert.

Aufgabe der Erfindung ist es, ein Gerät der eingangs erwähnten Art zu schaffen, das eine geringe Bautiefe und Bauhöhe aufweist.

Die gestellte Aufgabe ist erfindungsgemäß dadurch gelöst, daß das Subchassis mit Aggregat und Drehteller im Hauptchassis um eine Schwenkachse schwenkbar ist, wobei die Schwenkachse etwa parallel zur Einschiebrichtung verläuft und die Schwenkbewegung des Subchassis von dem Lademechanismus gesteuert wird.

Durch die parallele Anordnung der Schwenkachse des Drehtellers und der Einschubrichtung kann die Schwenkachse seitlich neben dem Einschubweg angeordnet werden, wodurch die Bautiefe durch die schwenkbare Anordnung nicht vergrößert wird. Da sowohl der Drehteller als auch der Plattenandrücker schwenkbar angeordnet sind, ergibt sich eine V-Stellung, in die die Platte hineingeschoben wird. Im Vergleich zu einer Parallelverschiebung von Plattenteller und Plattenandrücker ermöglicht die V-Öffnung im Bereich der größten Abstand einen bereits geringeren Abstand der Schwenkteile voneinander als bei einer parallelen Anordnung.

Nach einer weiteren Ausgestaltung der Erfindung ist vorgesehen, daß die Schwenkachsen des Subchassis und des Plattenandrückers fluchten. Bei dieser Anordnung kann der Plattenrand in unmittelbarer Nähe der beiden Schwenkachsen von Subchassis und Plattenandrücker angeordnet werden. Dies ist günstig für die Gerätebreite.

Nach einer weiteren Ausgestaltung der Erfindung ist vorgesehen, daß der Plattenandrücker vom Subchassis getragen wird. Dies ermöglicht ein Zusammenfassen der Achsen von Subchassis und Plattenandrücker. Die Steuerung des Lademechanismus wird auf diese Art und Weise erleichtert.

Nach einer weiteren Ausgestaltung der Erfindung ist vorgesehen, daß der Plattenandrücker ein sich in der Einschieberichtung erstreckendes Führungsgegenlager für den Plattenrand aufweist, wobei sich das Führungsgegenlager in der Nähe der Schwenkachse befindet. Wenn das Führungsgegenlager sich in der Nähe der Schwenkachse befindet, dann kann sich der Plattenrand ganz dicht an dieser Schwenkachse und damit an der dortigen Seitenwand befinden. Auch dies begünstigt eine schmale Breitenabmessung des Gerätes.

Nach einer weiteren Ausgestaltung der Erfindung ist vorgesehen, daß der Lademechanismus eine Ladeschiebeeinrichtung und eine Ladepositioniereinrichtung aufweist, wobei die Ladeschiebeeinrichtung für das Einschieben bzw. Auswerfen der Platte parallel zur Einschieberichtung arbeitet, während die Ladepositioniereinrichtung quer zur Einschieberichtung arbeitet. Das senkrecht zueinander Arbeiten der Ladeschiebeeinrichtung und der Ladepositioniereinrichtung führt dazu, daß für die Bewegungsabläufe nach dem Einschieben keine weitere Bautiefe benötigt wird. Dies begünstigt die Verringerung der Bautiefe.

Nach einer weiteren Ausgestaltung der Erfindung ist vorgesehen, daß die Ladeschiebeeinrichtung eine Ladeschieberplatte aufweist, auf der in ihrer Längsrichtung eine Schieberreiterplatte geführt ist, wobei die Ladeschieberplatte und die Schieberreiterplatte in einer gegenseitig gegen Federkraft verschobenen Stellung verspannt verriegelbar sind mittels eines schwenkbaren Riegelelementes, das mittels Federkraft in die Riegelstellung gedrängt wird. Die gegenseitige Verspannung wird vorzugsweise beim Handeinschieben der Platte herbeigeführt, was zur Folge hat, daß die Platte bei der Auswerfbewegung von der vorgespannten Feder weiter ausgeworfen werden kann, ohne daß dabei ein zusätzlicher Motorantrieb erforderlich wäre.

Die gegenseitige Verspannung von Ladeschieberplatte und Schieberreiterplatte kann ein Indiz dafür sein, daß der Anfang des Ladevorganges ordnungsgemäß abgelaufen ist. Ist die Verspannung nicht eingetreten, weil die Verriegelung nicht eingetreten ist, dann wird vorzugsweise der Motor für den weiteren Ladevorgang gar nicht in Betrieb gesetzt. Dies ist ein guter Schutz gegen Fehlladung und ein guter Schutz für die Platte.

Nach einer weiteren Ausgestaltung der Erfindung ist vorgesehen, daß an der Schieberreiterplatte eine erste Anschlagnase befestigt ist, über die beim Handeinschieben die Schieberreiterplatte gegenüber der Ladeschieberplatte verschiebbar ist bis zur Verriegelung beider Platten mittels des Riegelelementes. Damit kann beim Handeinschieben die Verriegelung vorgenommen werden und der Motoranlauf beginnen. Beim Auswerfen geht der Motorauswurf nach dem Entriegeln in den Federauswurf über.

Nach einer weiteren Ausgestaltung der Erfindung ist vorgesehen, daß die Platte während ihres Einschiebens mit ihrem Rand zwischen dem Führungsgegenlager an dem Plattenandrücker und einer sich parallel gegenüber erstreckenden Plattenführung geführt ist, wobei eine zweite Anschlagnase, die schräg zur Einschieberichtung verschieblich ist, federbelastet nach dem Handeinschieben hinter die Platte drückt und diese der nach hinten wegfahrenden ersten Anschlagnase nachschiebt. Dieses Nachschieben der zweiten Anschlagnase stellt sicher, daß die Platte nach dem Handeinschieben und dem Anlaufen eines Motorantriebes des Lademechanismus nicht mehr von Hand ergreifbar ist, weil sie von der zweiten Anschlagnase weiter nach hinten geschoben wird.

Nach einer weiteren Ausgestaltung der Erfindung ist vorgesehen, daß der Lademechanismus eine Antriebseinrichtung aufweist, die entweder die Ladeschiebeeinrichtung oder die Ladepositioniereinrichtung antreibt. Auf diese Art und Weise ergeben sich zwei gut gegeneinander abgegrenzte Ladestufen, nämlich zunächst der Einzug und dann das Positionieren.

Nach einer weiteren Ausgestaltung der Erfindung ist vorgesehen, daß die Antriebseinrichtung ein Zahnradgetriebe mit einem von einem Schwenkarm getragenen Kupplungszahnrad aufweist, das gegen Ende der Platteneinschiebebewegung von einem Mitnehmer an der Schieberreiterplatte in eine Kupplungslage gedrängt wird, in der die Antriebseinrichtung mit einem Getriebe der Ladepositioniereinrichtung kuppelt, wobei das Anstoßen nur stattfinden kann, wenn zuvor das Riegelelement die Ladeschieberplatte mit der Schieberreiterplatte in gegeneinander verspannter Lage gekuppelt hat. Nur wenn die Platte genügend weit von Hand eingeschoben worden ist, so daß die Ladeschieberplatte und die Schieberreiterplatte mittels des Riegelelementes verspannt wurden, kann der Übergang von der ersten Stufe des Einschiebens zur zweiten Stufe des Positionierens vor sich gehen. Sind das Verspannen und das Verriegeln nicht eingetreten, dann kann das Zahnrad nicht das Getriebe der Ladepositioniereinrichtung kuppeln. Eine Platte, die nicht weit genug eingeschoben wurde, kann damit nicht positioniert werden. Damit werden Beschädigungen der Platte und des Lademechanismus vermieden.

Nach einer weiteren Ausgestaltung der Erfindung ist vorgesehen, daß dann, wenn die Ladepositioniereinrichtung in Betrieb gesetzt wird, diese den Antrieb der Ladeschiebeeinrichtung in eine Freilaufstellung zur Antriebseinrichtung überführt. Durch dieses automatische Außer-Betrieb-Setzen der Ladeschiebeeinrichtung werden Arbeitsgeräusche und Beschädigungen der Ladeschiebeeinrichtung vermieden. Zusätzliche Entkupplungsteile sind überflüssig.

Nach einer weiteren Ausgestaltung der Erfindung ist vorgesehen, daß die Ladepositioniereinrichtung einen Positionierschieber aufweist, von dem Schwenkbewegungen der Baueinheit aus Drehteller und Aggregat einerseits und Plattenandrücker andererseits derart gesteuert werden, daß diese von beiden Seiten gegen die eingeschobene Platte geschwenkt werden.

Weil die Ladepositioniereinrichtung quer zur Ladeschiebeeinrichtung arbeitet, arbeitet auch der Positionierschieber quer zur Einschieberichtung. Der Positionierschieber kann teilweise überlappend mit de Ladeschiebeeinrichtung arbeiten, womit Bautiefe und Baubreite verringerbar sind. Außerdem sind die Getriebeteile des Antriebes auf einen kleinen Raum begrenzt. Die Getriebeteile brauchen auch nicht an der Hinterseite des Gerätes zu liegen, sondern lassen sich flächig auf dem Hauptchassis anordnen.

Nach einer weiteren Ausgestaltung der Erfindung ist vorgesehen, daß der Positionierschieber auf einen Freigabeschieber einwirkt, der dann, wenn die Baueinheit und der Plattenandrücker die Platte positioniert und festgelegt haben, die Plattenführung und die zweite Anschlagnase von dem Plattenrand wegdrückt. Auch die Positioniereinrichtung arbeitet damit in zwei Stufen, und zwar in einer ersten Stufe, in der der Positionierschieber allein die Platte positioniert, und in einer zweiten Stufe, in der zusammen mit dem Freigabeschieber das Wegdrücken der Plattenführungen und der zweiten Anschlagnase vom Plattenrand bewirkt wird.

Nach einer weiteren Ausgestaltung der Erfindung ist vorgesehen, daß die Baueinheit, die gegenüber dem Subchassis federnd abgestützt ist, während des Ladevorganges und bei entnommener Platte von quer zur Einschieberichtung verschiebbaren Riegelschienen und einem Schwenkhebel am Subchassis in allen Bewegungsrichtungen verriegelt gehalten ist. Die Riegelschienen lassen sich dabei leicht mit den Verschiebewegen von Positionierschieber und Freigabeschieber mit bewegen, wodurch die Baueinheit in die entriegelte Betriebslage überführbar ist.

Nach einer weiteren Ausgestaltung der Erfindung ist vorgesehen, daß die Riegelschienen an dem Subchassis verschieblich geführt sind und von dem Freigabeschieber seitlich etwa zusammen mit dem Wegdrücken von Plattenführung und zweiter Anschlagnase derart verschoben werden, daß die Baueinheit entriegelt wird. Da das Subchassis verschwenkbar ist, ist es günstig, die Riegelschienen auch auch auf dem verschwenkbaren Subchassis verschiebbar zu machen, obwohl sie gesteuert werden von der Freigabeplatte, die längs des Hauptchassis arbeitet.

Nach einer weiteren Ausgestaltung der Erfindung ist vorgesehen, daß die Riegelschienen Riegelgabeln aufweisen, in die in verriegelter Lage der Baueinheit Stifte der Baueinheit greifen. Dabei ist es auch von Vorteil, daß der Freigabeschieber vor seiner Freigabebewegung die Stifte der Baueinheit in den Riegelgabeln blockiert, wobei der Schwenkhebel in der Riegelstellung eine Kraft auf die Baueinheit ausübt und die Baueinzheit ihre Stifte zum Blockieren in die Riegelgabeln eindrückt. Der Freigabeschieber sorgt damit über die Baueinheit für ein betriebssicheres Eingreifen der Stifte der Baueinheit in die Gabeln, solange er nicht selbst freigegeben wird von dem Positionierschieber.

Nach einer weiteren Ausgestaltung der Erfindung ist vorgesehen, daß zwischen Subchassis und Baueinheit eine federelastische Verbindung vorgesehen ist, die bei einer zur Horizontalen schrägen Einbaulage in ein Kraftfahrzeug eine Gewichtskompensation herbeiführt, wobei die Federkräfte durch den Masseschwerpunkt der Baueinheit verläuft. Eine derartige federelastische Verbindung unterstützt die stabile federnde Aufhängung der Baueinheit bei schrägem Einbau in Kraftfahrzeuge. Die Seitenstabilität der federnden Abstützung der Baueinheit im Subchassis braucht deshalb nicht übertrieben kräftig ausgeführt zu sein.

Die Erfindung wird anhand eines Ausführungsbeispieles näher erläutert. Es zeigen:

Fig. 1 ein Gerät zum Aufnehmen und/oder Wiedergeben von Signalen auf Informationsplatten mit einem lichtoptischen Einschreibe-und/oder Ausleseaggregat, das der Einfachheit halber nicht dargestellt ist, wobei der Lademechanismus, von dem einige Teile nicht dargestellt sind, in eine Anfangsstellung gebracht ist, in die die Informationsplatte eingeschoben werden soll,

Fig. 2 den Lademechanismus, wobei die Informationsplatte teilweise mit der Hand eingeschoben ist,

Fig. 3 den Lademechanismus mit weiter eingeschobener Informationsplatte bei eingeschaltetem Antriebsmotor des Lademechanismus,

Fig. 4a, 4b, 4c die Wirkungsweise eines Riegelelementes zwischen zwei Schieberplatten des Lademechanismus gemäß Pfeil IV-IV in Fig. 3,

Fig. 5 den Lademechanismus im Bereich der Umschaltung des Antriebes von einer ersten Ladestufe in eine zweite Ladestufe,

Fig. 5a eine vergrößerte Darstellung des Antriebes im Augenblick der Umschaltung gemäß Fig. 5,

Fig. 6 den Lademechanismus bei Beginn der zweiten Ladestufe,

Fig. 7 eine schematische Seitenansicht des Gerätes gemäß Ansicht VII in Fig. 6,

Fig. 8 den Lademechanismus des Gerätes in der zweiten Ladestufe nach dem Positionieren der Informationsplatte,

Fig. 9 eine schematische Seitenansicht gemäß Pfeil IX in Fig. 8,

Fig. 9a einen Teil aus Fig. 9, das in Fig. 9 zur besseren Übersicht weggeschnitten ist,

Fig. 10 den Lademechanismus des Gerätes in der Funktionsstufe Ladeende, entsprechend dem Anfang der Auswerfbewegung,

Fig. 11 eine schematische Ansicht des Gerätes in Richtung des Pfeiles XI in Fig. 10,

Fig. 11a einen Teil der Fig. 11, der in dieser Figur der Übersichtlichkeit wegen weggeschnitten ist,

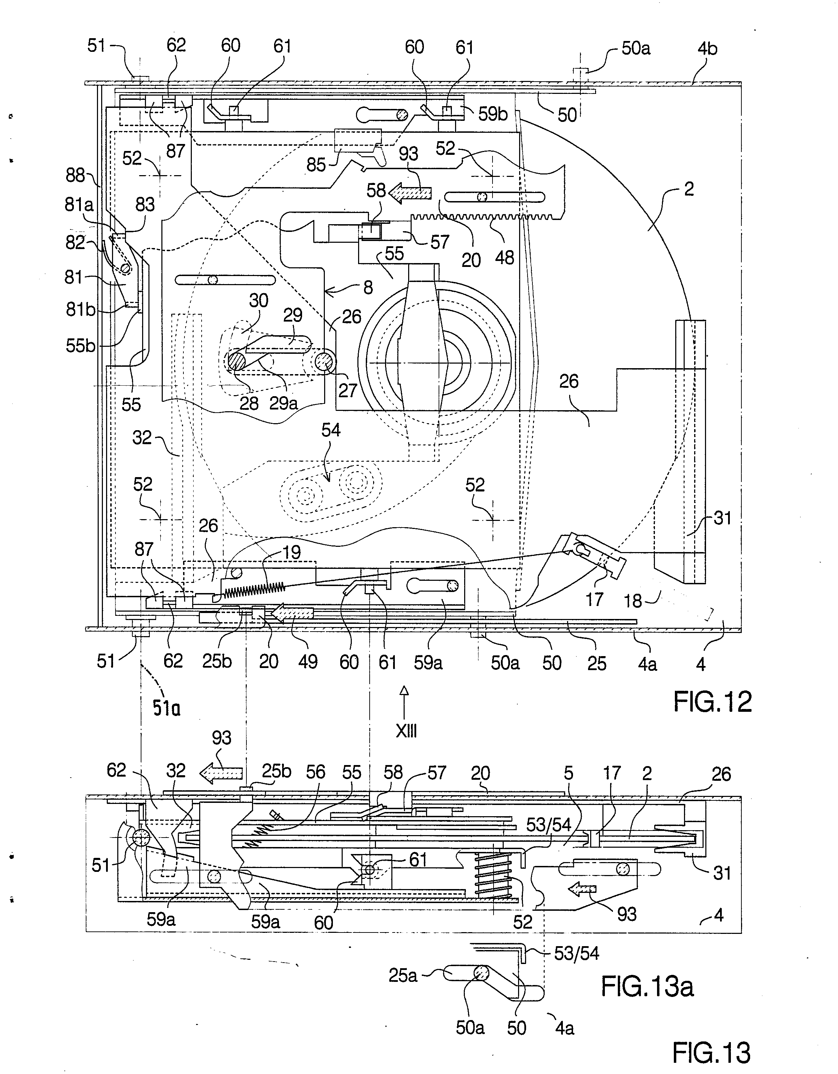

Fig. 12 die Funktion der zweiten Ladestufe in der Auswerfbewegung bei noch positionierter Informationsplatte, die jedoch am Rand bereits wieder erfaßt ist,

Fig. 13 eine schematische Seitenansicht in Richtung eines Pfeiles XIII in Fig. 12,

Fig. 13a ein der Übersichtlichkeit wegen aus der Darstellung nach Fig. 13 herausgeschnittenes Teil,

Fig. 14 die zweite Ladestufe in Auswerfbewegung bei freigegebener Informationsplatte,

Fig. 15 eine schematische Seitenansicht des Gerätes in der Funktionsstellung nach Fig. 14 gemäß Pfeil XV

Fig. 16 den Übergang von der zweiten Ladestufe in die erste Ladestufe bei der Auswerfbewegung,

Fig. 16a eine vergrößerte Darstellung des Antriebes bei dem Übergang von der zweiten Ladestufe in die erste Ladestufe bei der Auswerfbewegung,

Fig. 17 die Auswerfbewegung der ersten Ladestufe,

Fig. 18a, 18b, 18c drei Stellungen des Riegelelementes zwischen den beiden Schiebern zwischen der Verriegelungsstellung bis zur Entriegelungsstellung,

Fig. 19 einen Teil der ersten Ladestufe bei der Auswerfbewegung nach der Entriegelung von zwei gegeneinander verspannten Schiebern, wobei die Entspannung den Federauswurf der Informationsplatte bewirkt hat.

In einem Gehäuse 1 ist ein Gerät 3 zum Aufnehmen und/oder Wiedergeben von Signalen auf eine Informationsplatte 2 eingebaut. Das Gerät 3 weist ein Hauptchassis 4 mit einer Vorderwand 4a und einer Rückwand 4b auf. Die Vorderwand 4a hat einen angedeuteten Aufnahmeschlitz 5, durch die Informationsplatte 2 einschiebbar ist. Auf dem Hauptchassis 4 sind Teile eines Lademechanismus 6 angeordnet. Dieser Lademechanismus 6 besteht aus drei Hauptteilen: einer Ladeschiebeeinrichtung 7, einer Ladepositioniereinrichtung 8 und einem Antrieb 9.

Diese Ladeschiebeeinrichtung 7 stellt eine erste Ladestufe und die Ladepositioniereinrichtung stellt eine zweite Ladestufe dar. Beide werden getrennt voneinander von dem Antrieb 9 angetrieben. Die Ladeschiebeeinrichtung 7 arbeitet in Richtung eines Pfeiles 10, und die Ladepositioniereinrichtung 8 arbeitet senkrecht dazu. Darauf wird später noch deutlicher eingegangen.

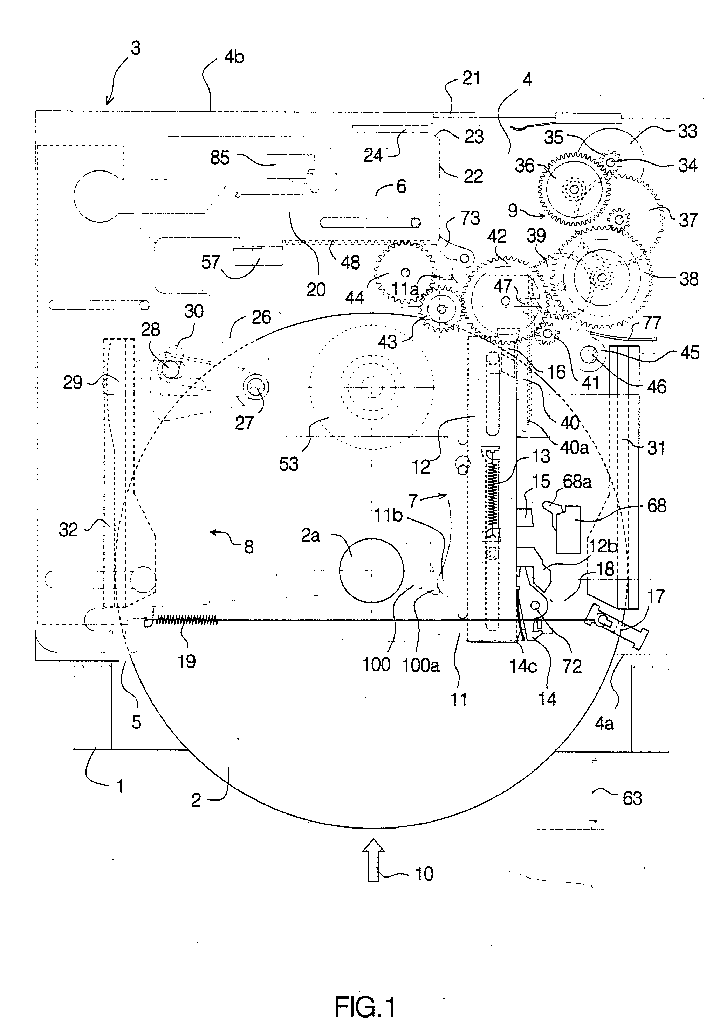

Die Ladeschiebeeinrichtung 7 weist eine Ladeschieberplatte 11 und eine darauf verschiebliche Schieberreiterplatte 12 auf. Die Ladeschieberplatte 11 und die Schieberreiterplatte 12 sind mittels einer Feder 13 gegeneinander verspannbar. Wie aus Fig. 1 zu ersehen ist, sind sowohl die Ladeschieberplatte 11 als auch die Schieberreiterplatte 12 in Richtung des Pfeiles 10 mit Hilfe von Längsführungen in Längsrichtung geführt. Die Schieberreiterplatte 12 ist dabei auf der Ladeschieberplatte 11 längsverschieblich geführt. Es ist ein Riegelelement 14 vorgesehen, mit dem die Ladeschieberplatte 11 und die Schieberreiterplatte 12 in gegeneinander verspannter Lage gegeneinander verriegelbar sind. An der Schieberreiterplatte 12 ist ein Mitnehmer 15 vorgesehen, der auf noch näher zu erklärende Weise mit der Antriebseinrichtung 9 zusammenwirken kann.

Auf der Schieberreiterplatte 12 ist noch eine erste Anschlagnase 16 befestigt, die mit dem beim Einschieben vorn liegenden Rand der Platte 2 zusammenwirkt. Weiterhin ist eine zweite Anschlagnase 17 vorgesehen, die in einem Schlitz 18 verschieblich ist und mittels einer Zugfeder 19 verschoben werden kann in eine Richtung schräg zu der Einschieberichtung nach Pfeil 10. Diese zweite Anschlagnase 17 drückt gegen den beim Einschieben hinteren Rand der Platte 2.

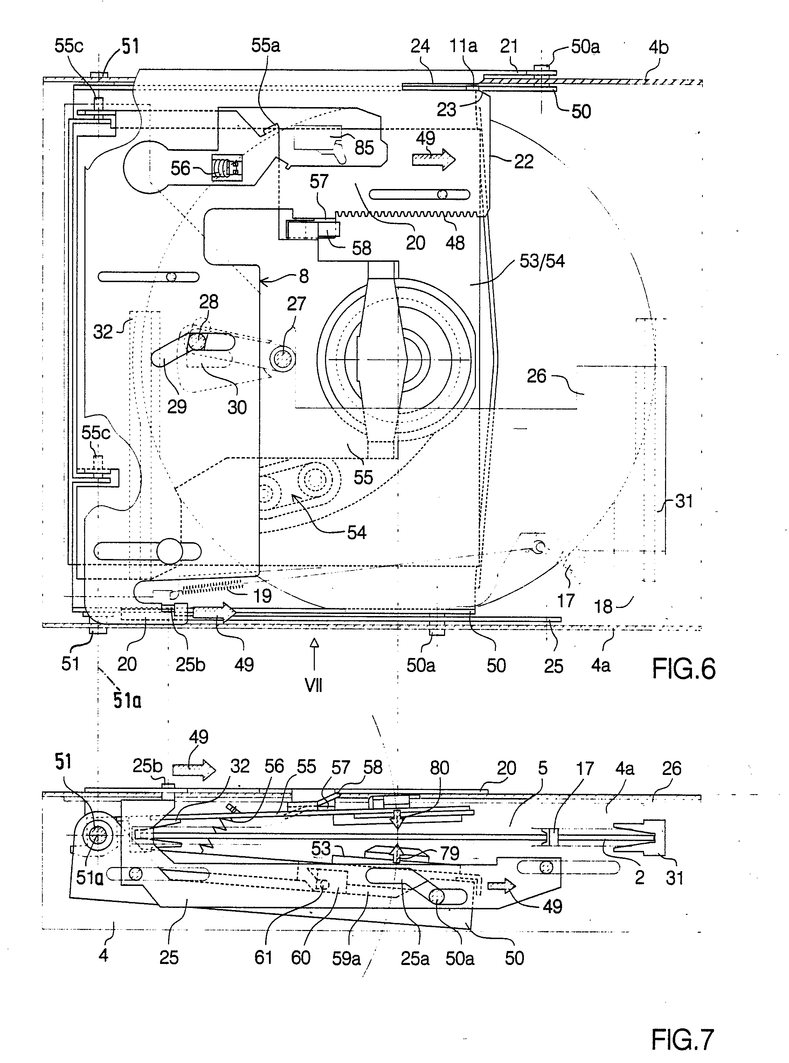

Die Ladepositioniereinrichtung 8 weist einen Positionierschieber 20 auf, der quer zur Einschieberichtung nach Pfeil 10 verschieblich geführt ist. Dieser Ladepositionierschieber hat nahe der Rückwand 4b eine Abkantung 21, die längs der Rückwand 4b verschieblich ist. Der Positionierschieber 20 hat in Richtung auf den Antrieb 9 eine Kante 22 in Richtung des Pfeiles 10, die nach einer Abschrägung 23 übergeht in eine Längsnut 24 quer zur Einschieberichtung nach Pfeil 10. Der Positionierschieber 20 ist weiterhin mit einem Kulissenschieber 25 verbunden, der aus Fig. 6 und 7 zu ersehen ist.

Mit dem Positionierschieber 20 arbeitet ein Freigabeschieber 26 zusammen. Die Schieber 20 und 26 sind gemeinsam quer zu Pfeil 10 verschieblich und wirken über eine Lasche 27 zusammen. Ein Ende der Lasche 27 ist gelenkig an dem Freigabeschieber 26 gelagert, und das andere Ende weist einen Stift 28 auf, der in einer Längsnut 29 des Positionierschiebers geführt ist. Die Längsnut ist ein wenig V-förmig abgeknickt. Weiterhin ist der Stift 28 geführt in einer V-förmigen Nut 30 des Chassis. Die Feder 19 greift mit ihrem von der zweiten Anschlagnase 17 abliegenden Ende an dem Freigabeschieber 26 an. Weiterhin trägt der Freigabeschieber 26 eine Plattenführung 31, die einem Führungsgegenlager 32 gegenüberliegt. Beide erstrecken sich in einer Längsrichtung entsprechend Pfeil 10.

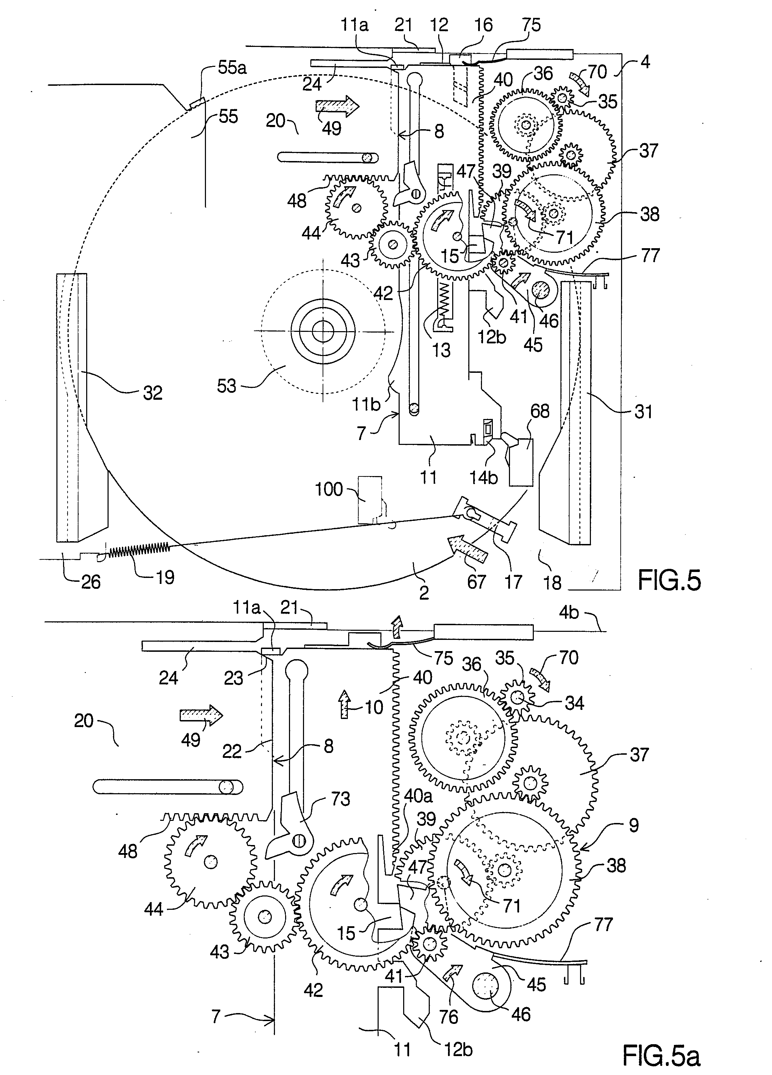

Der Antrieb 9 weist einen Motor 33 auf, der auf seiner Welle 34 ein Zahnrad 35 trägt. Der Motor 33 ist in zwei Richtungen antreibbar. Zwischenräder 36, 37, 38 treiben ein Ritzel 39 an. Dieses Ritzel 39 arbeitet in der ersten Stufe mit einer Zahnstange 40 zusammen und in der zweiten Stufe über ein schwenkbares Zahnrad 41 auf weitere Zahnräder 42, 43, 44. Das Zahnrad 41 ist auf einem Schwenkarm 45 gelagert, der um eine Achse 46 schwenkbar ist. Der Schwenkarm 45 weist noch einen Ansatz 47 auf, der mit dem Mitnehmer 15 zusammenwirken kann. Das Ritzel 39 kann mit der Zahnstange 40 außer Eingriff kommen, sobald eine auslaufende Zahnung 40a über das Ritzel hinweg gelaufen ist (Fig. 5a). In diesem Zustand, der in Fig. 5a deutlicher beschrieben ist, kommt das Zahnrad 41 mit dem Ritzel 39 in Eingriff, wonach es eine formschlüssige Verbindung zwischen dem Ritzel 39 und dem Zahnrad 42 herstellt. Damit wird dann über das Zahnrad 44 eine Zahnstange an dem Positionierschieber 20 angetrieben und der Positionierschieber 20 in Richtung eines Pfeiles 49 (Fig. 6) verschoben.

Auf dem Hauptchassis 4 ist mittels Zapfen 51 verschwenkbar ein Subchassis 50 gelagert (Fig. 6). Dieses Subchassis ist dabei schwenkbar um eine Achse 51a. Auf dem Subchassis ist mittels Federabstützungen 52 ein Drehteller 53 mit dem Einschreibe-und/oder Ausleseaggregat 54 federelastisch gelagert.

Auf dem Hauptchassis ist mittels Zapfen 55c ein um die Achse 51a auch verschwenkbar ein Plattenandrücker 55. In der Ladestellung sind die Baueinheit 53, 54 und der Plattenandrücker 55 V-förmig auseinander geschwenkt (Fig. 7), so daß zwischen sie die Informationsplatte 2 schiebbar ist. Eine Feder 56 versucht, den Plattenandrücker 55 in Richtung auf die Platte 2 zu schwenken. Dies wird verhindert mit Hilfe eines Ansatzes 57 am Positionierschieber und eines Ansatzes 58 an dem Plattenandrücker 55. Auf dem Subchassis 50 sind noch Riegel schienen 59 verschieblich gelagert, die Riegelgabeln 60 aufweisen, in die Stifte 61 der Baueinheit 53/54 einfahren können. Die Riegelschienen 59 werden in Längsrichtung gesteuert mittels Laschen 62 am Freigabeschieber 26.

Wenn ein Gerät mit einer Informationsplatte 2 beladen werden soll, dann wird die Informationsplatte 2 in den Aufnahmeschlitz 5 der Vorderwand 4a eingeschoben, bis der hintere Rand der Platte gegen die erste Anschlagnase 16 stößt. Mit der Hand wird dann in Richtung des Pfeiles 10 weiter nachgeschoben um eine in Fig. 1 mit 63 bezeichnete Länge. Diese Länge liegt in der Größenordnung von 18 mm. Andere Längen sind selbstverständlich möglich. Die Platte liegt seitlich an der Plattenführung 31 und an dem Führungsgegenlager 32. Außerdem liegt die zweite Anschlagnase 17 an dem Rand der Platte 2 an. Der Rand der Platte 2 hat die zweite Anschlagnase 17 beim Einschieben entgegen der Zugrichtung der Feder 19 im Schlitz 18 nach außen gezogen.

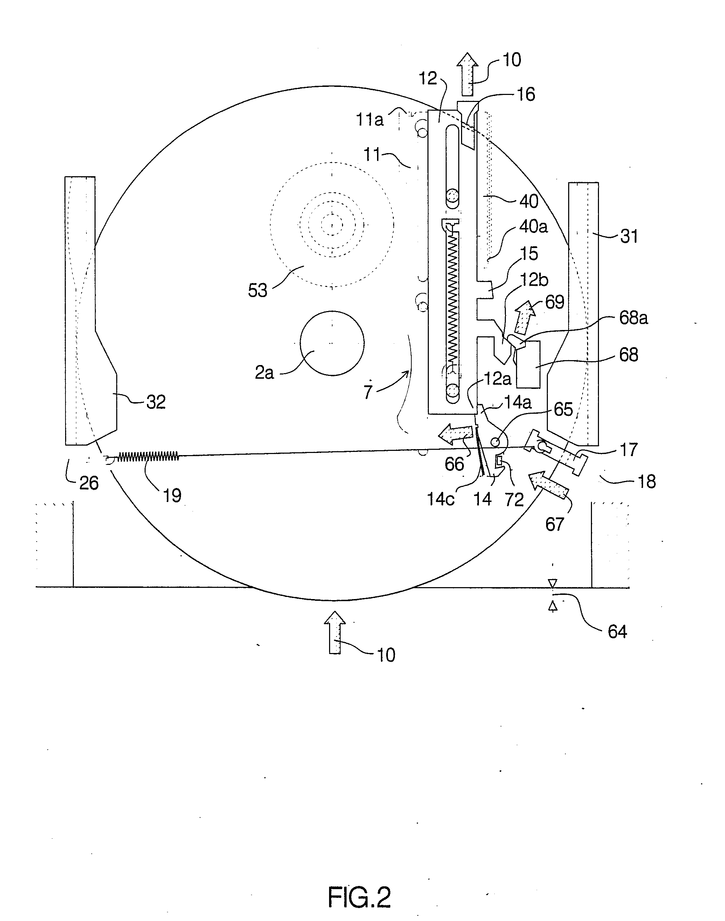

In Fig. 2 ist dargestellt, wie weit die Platte 2 nach dem ersten Von-Hand-Einschieben noch aus dem Gehäuse 1 hervorsteht. Dieser kurze Überstand in der Größenordnung von beispielsweise 3 mm ist mit 64 bezeichnet. Beim Einschieben der Platte 2 hat der Plattenrand die erste Anschlagnase in Richtung des in Fig. 2 dargestellten Pfeiles 10 nach hinten in das Gerät verschoben entgegen der Kraft der Feder 13. Die Ladeschieberplatte 11 ist während dieses Einzugvorganges in ihrer Grundstellung stehen geblieben. Nur die Schieberreiterplatte 12 hat sich mit der ersten Anschlagnase nach hinten bewegt. Durch das Gegeneinander-Verschieben der Ladeschieberplatte 11 und der Schieberreiterplatte 12 konnte das Riegelelement 14 mit einer Rastecke 14a hinter eine hintere Ecke 12a der Reiterschieberplatte 12 fallen. Dieses Einfallen erfolgt mit Hilfe der Federkraft einer Feder 14b, die an dem Riegelelement 14 befestigt ist. Das Verschwenken des Riegelelementes 14 erfolgt um seinen Drehpunkt 65 in Richtung eines Pfeiles 66. Durch das Einfallen des Riegelelementes 14 hinter die Schieberreiterplatte 12 sind Schieberreiterplatte 12 und Ladeschieberplatte gegeneinander verspannt. Die zweite Anschlagnase 17 ist beim weiteren Einfahren der Platte 2 in Richtung des Pfeiles 67 dem Plattenrand gefolgt. Das Einschieben der Platte 2 wurde dadurch mit Hilfe der Feder 19 erleichtert. Die Platte 2 ist weiterhin in der Plattenführung 31 und dem Führungsgegenlager 32 geführt.

Bei dem weiteren Ladevorgang wird die Platte 2, die in der Stellung nach Fig. 2 nach dem Einfallen des Riegelelementes 14 stehengeblieben ist, nunmehr in Richtung des Pfeiles 10 kurz gedrückt, wodurch eine Nase 12b an der Schieberreiterplatte 12 gegen den Schaltstift 68a eines Einschalters 68 stößt. Der Schaltstift 68a wird in Richtung eines Pfeiles 69 bewegt, und der Schalter 68 schaltet den Antriebsmotor 33 des Antriebs 9 ein.

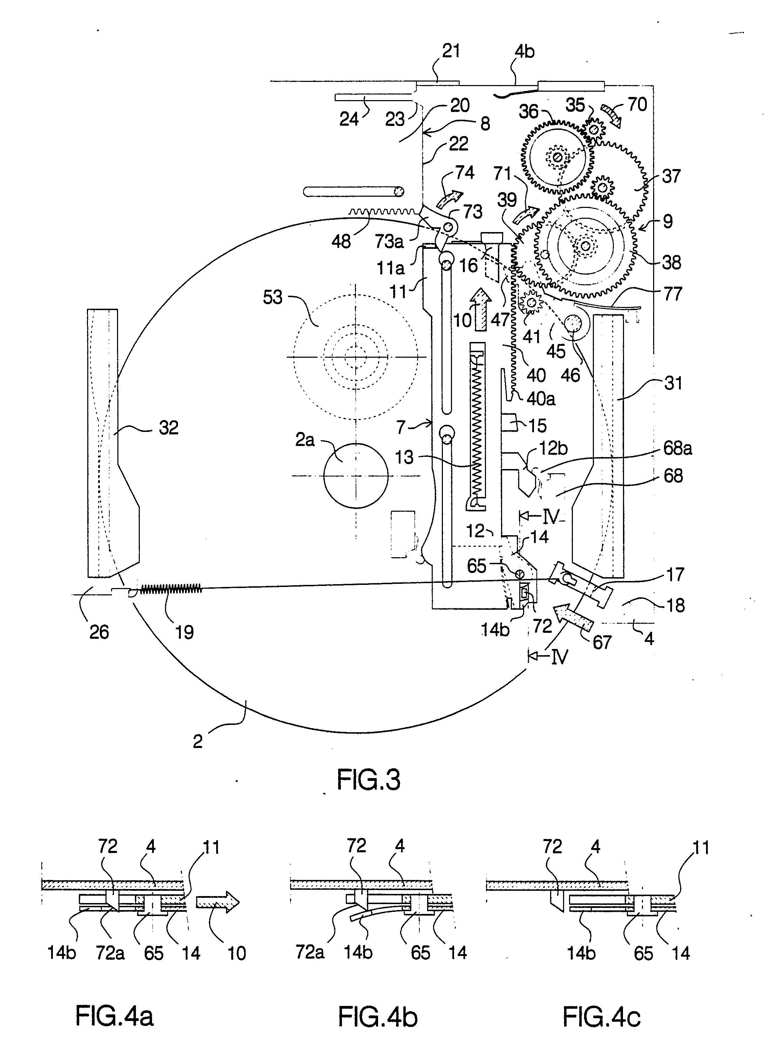

Mit dem Anlaufen des Antriebsmotors 33 beginnt das Zahnrad 35 sich in Richtung eines Pfeiles 70 zu drehen, womit auch das Zahnrad 39 in Richtung eines Pfeiles 71 umläuft. Da das Zahnrad 39 mit der Zahnstange 40 im Eingriff ist, zieht das Zahnrad 39 nun die gegeneinander verspannt verrasteten Platten 11 und 12 weiter nach hinten ein. Die Darstellung in Fig. 3 zeigt einen Status, in dem der Anlauf des Einziehens gerade beginnt, jedoch eine Nase 14b des Riegelelementes 14 noch vor einem Nocken 72 des Hauptchassis 4 liegt. Die Wirkungsweise des Riegelelementes 14 zusammen mit dem Nocken 72 ist in den Fig. 4a bis 4c näher erläutert. Fig. 4a zeigt, wie das Riegelelement 14 sich in Richtung eines Pfeiles 10 bewegt. Die Nase 14b liegt in Fig. 4a noch vor dem Nocken 72, der in der Richtung 10 eine schräge Auflaufkante 72a aufweist. Im weiteren Bewegungslauf des Riegelementes 14 läuft die Nase 14b auf die schräge Kante 72a des Nockens 72 auf und biegt sich nach oben weg, bis sie bei der Darstellung nach Fig. 4c den Nocken 72 verlassen hat und wieder in ihre ebene Lage zurückgekehrt ist. Der Sinn dieses Bewegungsablaufes ist es, das Riegelelement 14 den Nocken 72 passieren zu lassen, ohne daß das Riegelelement 14 die gegenseitige Verriegelung der Platten 11 und 12 aufhebt.

Auf dem Hauptchassis 4 ist ein doppelarmiger Hebel 73 gelagert, der mit einem hochgebogenen Ansatz 11a der Ladeschieberplatte 11 zusammenwirkt. Liegt 11a noch in der Lage nach Fig. 3, dann stößt ein Arm 73a des doppelarmigen Hebels 73 gegen die Kante 22 des Positionierschiebers 20. Damit ist der Positionierschieber noch in einer Verschieberichtung in Richtung eines Pfeils 49 blockiert (siehe Fig. 5). Da das Zahnrad 39 im Eingriff mit der Zahnstange 40 die verspannten Platten 11 und 12 weiter nach innen fährt, fährt auch der Ansatz 11a weiter nach hinten und stößt gegen den Arm 73a des doppelarmigen Hebels 73. Damit wird der doppelarmige Hebel 73 in Richtung eines Pfeiles 74 verschwenkt, und er gibt dem Ansatz 11a den Weg weiter nach hinten frei. Gleichzeitig ist der Positionierschieber 20 dadurch in Bewegungsrichtung des Pfeiles 49 nach Fig. 5 freigegeben.

Die Blockierung des Positionierschiebers 20 mit Hilfe des Hebelarmes 73a erfolgt zur Sicherung gegen ein versehentliches Verschieben des Positionierschiebers infolge beispielsweise eines Stoßes. Dies könnte zur folge haben, daß der Ansatz 11a gegen die Zahnstange 48 des Positionierschiebers 20 aufläuft und damit Beschädigungen hervorrufen kann. Bei dem Nach-Hinten-Fahren der Platten 11 und 12 fährt auch die erste Rastnase 16 nach hinten. Die Platte 2 muß der nach hinten fahrenden ersten Rastnase 16 folgen. Dies bewirkt die zweite Rastnase 17, indem sie nämlich unter Zugkraft der Feder 19 die Platte 2 nachdrückt, so daß die mit der ersten Rastnase 16 bei deren Zurückfahren in Kontakt bleibt.

Fig. 5 zeigt einen Status, in dem die verspannten Platten 11 und 12 etwa in ihre hintere Endlage gefahren sind. Bei diesem Nach-Hinten-Fahren in die Endlage hat sich die erste Anschlagnase 16 von dem Plattenrand abgehoben und entfernt. Die Platte wird nunmehr aufgehalten von einem Anschlag 55a des Plattenandrückers 55. Gegen das hintere Ende der Ladeschieberplatte 11 drückt eine Blattfeder 75, die damit eine elastisch verspannte Endlage für die verspannten Platten 11 und 12 garantiert. Der Ansatz 11a ist auf die Abschrägung 23 aufgelaufen und wird von dieser in die Längsnut 24 hineingehoben und hineingeleitet, während der Positionierschieber 20 in Richtung des Pfeiles 49 vorzulaufen beginnt.

In Fig. 5a ist der Antrieb 9 vergrößert dargestellt, so daß die Übergabe des Antriebes von der ersten Stufe auf die zweite Stufe des Lademechanismus deutlicher erkennbar ist. Der Mitnehmer 15 der Reiterschieberplatte 11 ist deutlich sichtbar gegen den Ansatz 47 des Schwenkarmes 45 aufgelaufen. Der Schwenkarm 45 hat sich demzufolge um seine Achse 46 in Richtung eines Pfeiles 76 bewegt. Damit ist das Zahnrad 39 über das Zahnrad 41 auf dem Schwenkarm 45 mit dem Zahnrad 42 der Ladepositioniereinrichtung 7 in Eingriff gekommen. Das Schwenken des Schwenkarmes 45 erfolgt gegen die Kraft einer Feder 77 am Schwenkarm 45. Die Zahnstange 40 kommt im Verlaufe dieser Schwenkbewegung des Schwenkarmes 45 mit dem Zahnrad 39 außer Eingriff, weil nämlich die Zahnung 40a sich verkürzt und ausläuft. Ein völliges Freikommen der Zahnstange 40 von dem Zahnrad 39 besorgt der Ansatz 11a, der nämlich von der Abschrägung 23 noch gegen die Wirkung der Feder 75 angehoben wird, so daß die Zahnstange 14 völlig von dem Zahnrad 39 freikommt. Nun erfolgt der Antrieb nur noch auf die Zahnräder 42, 43, 44 und weiter auf die Zahnstange 48. Der Positionierschieber 20 fährt nun in Richtung des Pfeiles 49 in der Zeichnung nach rechts weiter, und zwar über die verspannten Platten 11 und 12 hinweg. Der Ansatz 11a gleitet in den Schlitz 24 ein. Die Platte 2 ist nunmehr in ihre Positionierlage eingeschoben, in der sich der Plattenandrücker 55 mit dem Loch 2a der Platte 2 überdeckt.

Fig. 6 zeigt einen Status, in dem der Positionierschieber 20 in Richtung des Pfeiles 49 ein wenig vorgefahren ist, jedoch die Platte nach wie vor nur zwischen der Plattenführung 31 und dem Gegenführungslager 32 gehalten ist. Die zweite Anschlagnase 17 drückt gegen die Platte. Der hintere Rand der Platte 2 drückt gegen den Anschlag 55a.

Fig. 7 zeigt, wie die Platte 2 zwischen der Plattenführung 31 und dem Führungsgegenlager 32 eingedrückt ist.

Ebenfalls zeigt Fig. 7, daß das Subchassis 50 um die Achse 51a ein wenig nach unten geschwenkt ist und der Plattenandrücker 55 um die Achse 51a ein bißchen nach oben geschwenkt ist. Die beiden Teile bilden damit zwischen sich eine V-förmige Öffnung, in die die Platte 2 eingeschoben ist. Dieser Aufbau ermöglicht es, die Bauhöhe niedrig zu halten, weil nämlich die Platte 2 mit ihrem Rand bis nahezu in die engste Stelle des V's eingeschoben werden kann.

Die Abkantung 21 ist mit einer Kulisse entsprechend einer Kulisse 25a in einem Kulissenschieber 25 versehen. Der Kulissenschieber 25 steht in Wirkverbindung mit dem Positionierschieber 20 über eine Mitnehmernase 25b. Fig. 7 zeigt, wie ein Fahrstift 50a des Subchassis noch in einer unteren Beuge der Kulisse 25a liegt. Ebenso liegt der Fahrstift 50a in einem breiteren vertikalen Schlitz 78 des Hauptchassis 4. Eben dieselbe Konstruktion findet sich im Bereich der Abkantung 21. Liegt der Fahrstift bei der Darstellung nach Fig. 7 in dem unteren Knick der Kulisse 25a, dann liegen auch die Ansätze 57, 58 noch so gegeneinander, daß der Plattenandrücker nicht von der Feder 56 gegen die Platte 2 gezogen werden kann.

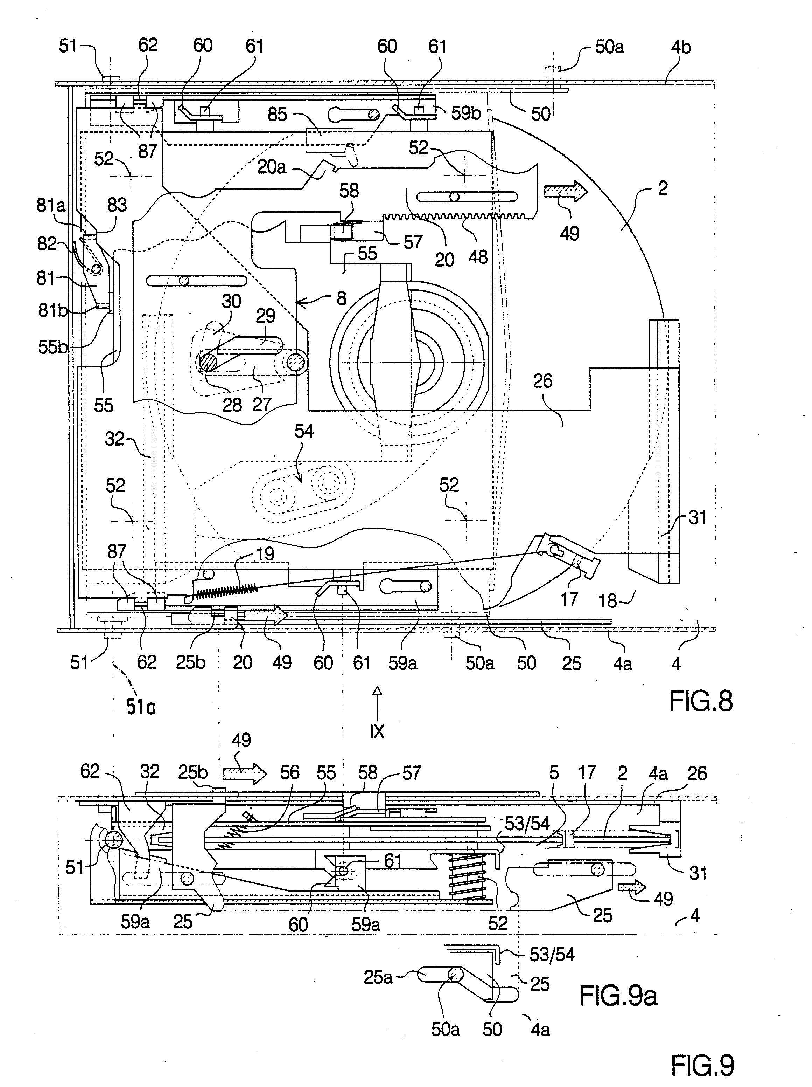

Fig. 8, 9 und 9a zeigen einen weiteren Status, in dem der Positionierschieber 20 in Richtung des Pfeiles 49 weiter nach rechts verfahren ist. Der Fahrstift 50a ist nun bis in den oberen Knick der Kulisse 25a weitergelaufen. Das hat zur Folge, daß das Subchassis 50 um die Achse 51 nach oben geschwenkt ist, so daß der Drehteller gegen die Platte drückt. Ebenso ist der Plattenandrücker, da die Ansätze 57, 58 auseinander gefahren sind, mittels der Feder 56 um die Achse 51a nach unten verschwenkt gegen die Platte.

Diese Verschwenkvorgänge sind aus Fig. 7 deutlich zu erkennen und mit den Pfeil 79 und 80 markiert. Zugleich ist, wie Fig. 8 zeigt, die Nut 29 nach rechts gelaufen und dementsprechend ist der Stift 28 in das linke Ende der Nut 29 gekommen. Die Lasche 27 ist dabei ein wenig entgegen dem Uhrzeigersinn verschwenkt. Der Freigabeschieber 26 hat sich bis zu diesem Augenblick noch nicht bewegt. Der Freigabeschieber 26 drückt gegen einen Arm 81a eines doppelarmigen Schwenkhebels 81, der mittels einer Feder 82 bestrebt ist, im Uhrzeigersinn zu schwenken. Da eine hintere Kante 83 gegen den Arm 81a stößt, wird der doppelarmige Hebel 81 entgegen dem Uhrzeigersinn geschwenkt gehalten, und sein anderer Arm 81b stößt gegen eine hochgebogene Lasche 55b des Plattenandrückers 55. Die Stifte 61 der Baueinheit 53/54 liegen damit noch fest in den Riegelgabeln 60.

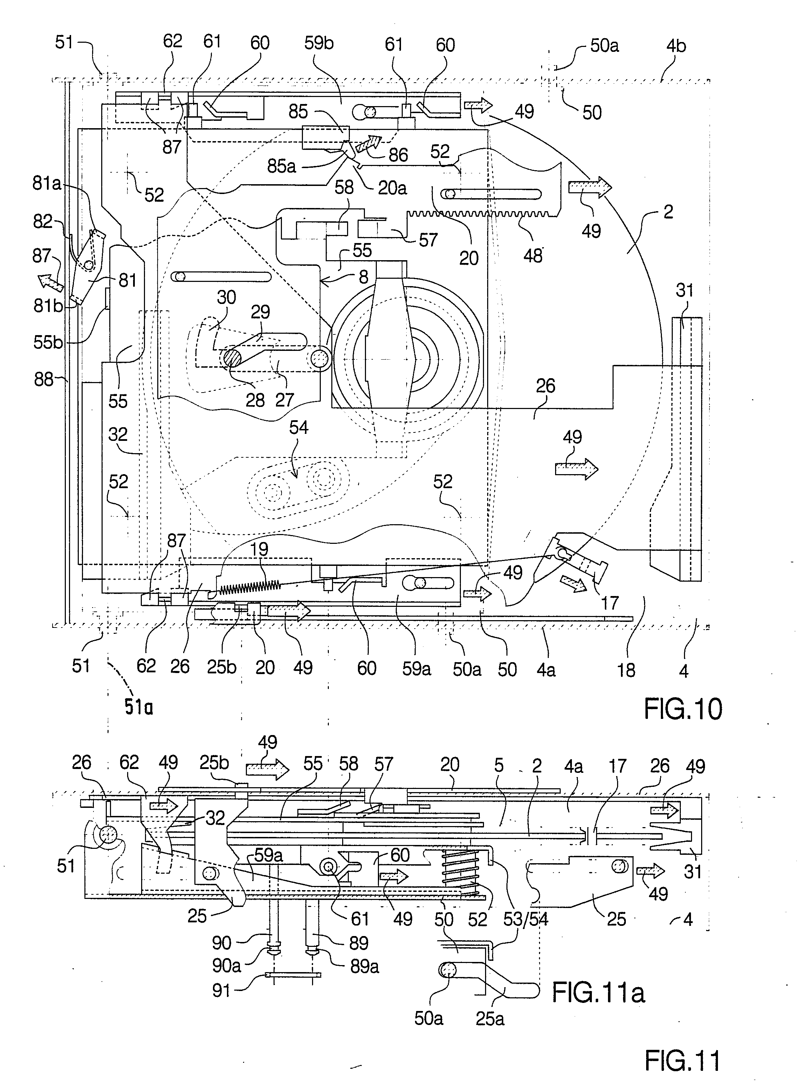

Die Fig. 10 und 11 zeigen einen Funktionsstatus, bei dem der Ladevorgang beendet ist. Der Positionierschieber 20 und der Freigabeschieber 26 sind in ihre Schiebeendlage gefahren. Der Stift 28 hatte, nachdem er in das linke Ende der Längsnut 29 eingelaufen war, den Freigabeschieber 26 nach rechts mitgenommen. Das Nach-Rechts-Verschieben des Freigabeschiebers 26 hatte zur Folge, daß die Plattenführung 31 und die zweite Anschlagnase 17 auseinander gefahren und mit dem Plattenrand außer Eingriff gekommen sind. Dies ist aus Fig. 10 und 11 deutlich zu entnehmen. An dem Führungsgegenlager 32 hat die Platte 2 Spiel bekommen, da der Plattenandrücker 55 beim Anlegen gegen die Platte 2 auf sein Mittelloch 2a eine Belastung in Richtung des Pfeiles 49 aufgegeben hat. Damit hat sich die Platte nach dem Entfernen der Plattenführung 31 ein wenig aus dem Führungsgegenlager 32 herausheben können. Beim Freiwerden von dem Führungsgegenlager 32 hat sich die Platte auch gleichzeitig von dem Anschlag 55a entfernt. Der Positionierschieber 20 hat mit einem Ansatz 20a den Schaltstift 85a eines Schalters 85 so in Richtung eines Pfeiles 86 beiseite gedrückt, daß der Schalter 85 den Antriebsmotor 33 ausgeschaltet hat.

Die Riegelschienen 59a und 59b wurden in Richtung des Pfeiles 49 nach rechts geschoben, weil Laschen 62 des Freigabeschiebers 26, die zwischen Lappen 87 der Riegelschienen 59a, 59b greifen, beim Vorschieben in Richtung des Pfeiles 49 die Riegelschienen nach rechts verschoben haben. Die Stifte 61 sind damit von den Riegelgabeln 60 freigekommen. Durch das Verfahren des Freigabeschiebers 26 nach rechts ist der Hebelarm 81a frei geworden, und die Feder hat den Hebel 81 im Uhrzeigersinn gemäß Pfeil 87 verschwenkt bis zu einem festen Anschlag 88 am Chassis. Der Hebelarm 81b ist damit von der Lasche 55b frei gekommen, und der Plattenandrücker ist damit nach hinten nicht mehr festgelegt. Durch das Freigeben der Lasche 55b und das Freiwerden der Stifte 61 ist die Baueinheit 53/54 frei geworden, so daß sie nunmehr auf den Federabstützungen 52 frei federnd ruht. Während des Abspielens können damit Stöße auf das Gerät keinen Einfluß auf den Abspielvorgang haben.

An dem Subchassis 50 und an der Baueinheit 53/54 sind Stifte 89, 90 angeordnet, die Nuten 89a, 90a aufweisen, in die ein federelastischer Gummiring 91 einlegbar ist. Der federelastische Ring erstreckt sich in der Einschubrichtung derart, daß seine Federkraft durch den Masseschwerpunkt der Baueinheit 53/54 verläuft. Durch das Schalten des Schalters 85 ist der Motor des Drehtellers in Betrieb gesetzt, und das Abspielen kann beginnen.

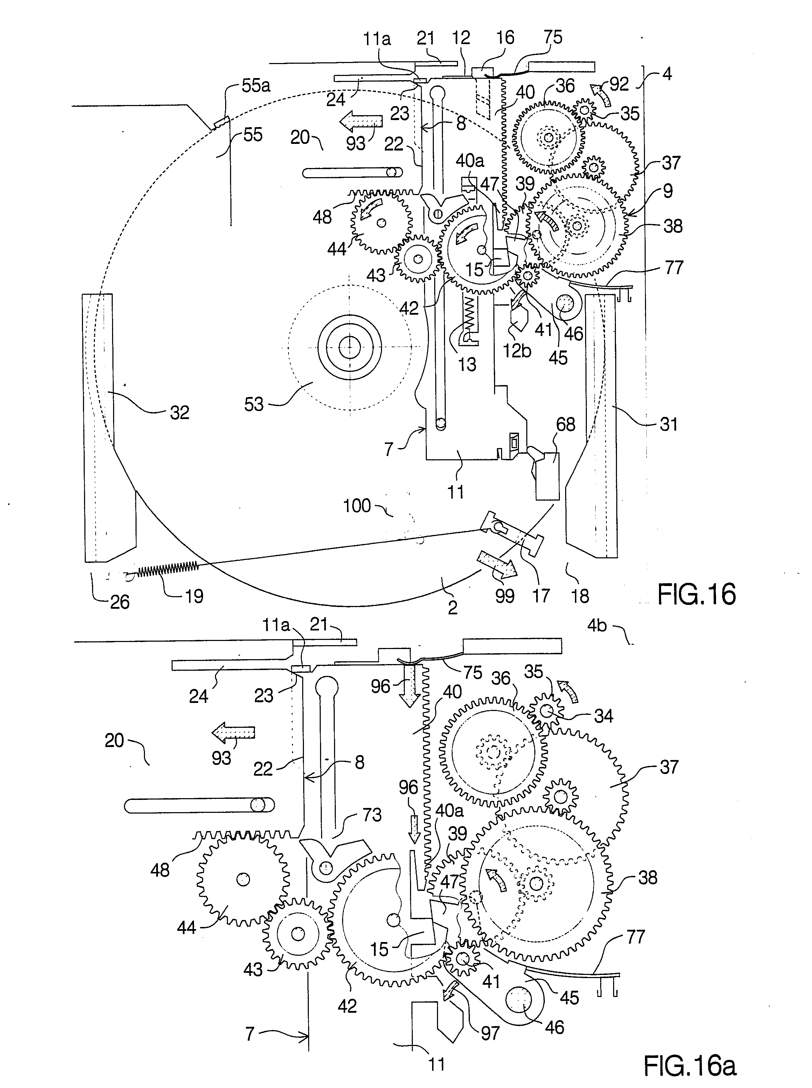

Ist die Platte 2 abgespielt, dann muß sie, wenn keine Wiederholung gewünscht wird, ausgeworfen werden. Dieser Auswerfvorgang läuft in entgegengesetzter Richtung zu dem Ladevorgang ab. Der umgekehrte Bewegungsablauf wird eingeleitet durch das Starten des Antriebsmotors 33 in entgegengesetzter Richtung. Dieses Starten in entgegengesetzter Richtung ist in Fig. 16 angedeutet durch einen Pfeil 92. Durch das Starten des Antriebsmotors 33 in entgegengesetzter Richtung fährt der Positionierschieber 20 in Richtung eines Pfeiles 93 nach links. Bei Beginn dieser Bewegung sind der Positionierschieber 20 und der Freigabeschieber 26 starr miteinander gekuppelt über den Stift 28. Der abgeknickte Verlauf der Längsnut 29 hat zur Folge, daß der Stift 28 nicht in der Längsnut 29 frei zurücklaufen kann, weil der Stift 28 einerseits auf eine schräge Wand 29a der Längsnut 29 aufläuft und andererseits erst in der Nut 30 des Hauptchassis 4 verbleibt. Beim gemeinsamen Verfahren in Richtung des Pfeiles 93 nimmt die Lasche 62 die Riegelschienen 59a und 59b nach links mit gemäß Pfeil 93. Demzufolge fahren die Riegelgabeln 60 über die Stifte 61, und die Kante 83 des Freigabeschiebers 26 verschwenkt den doppelarmigen Hebel 81 entgegen dem Uhrzeigersinn. Damit kommt der Hebelarm 81b an der Lasche 55b zur Anlage. Damit ist die Baueinheit 53/54 wieder gegen Eigenbewegungen arretiert. Mit der Rückwärtsbewegung des Freigabeschiebers 26 sind die Plattenführung 31 und die zweite Anschlagnase 17 wieder an den Plattenrand heran gefahren, und die Platte wird zwischen ihnen und dem Führungsgegenlager 32 erneut verklemmt. Der Fahrstift 50a ist damit in den oberen Knick der Kulisse 25a gekommen. Gleichzeitig ist der Stift 28 bis in den Knick der Nut 30 gelaufen. Danach läuft der Stift 28 längs der Längsnut 29 weiter, so daß der Freigabeschieber 26 nunmehr nicht mehr mitgenommen wird.

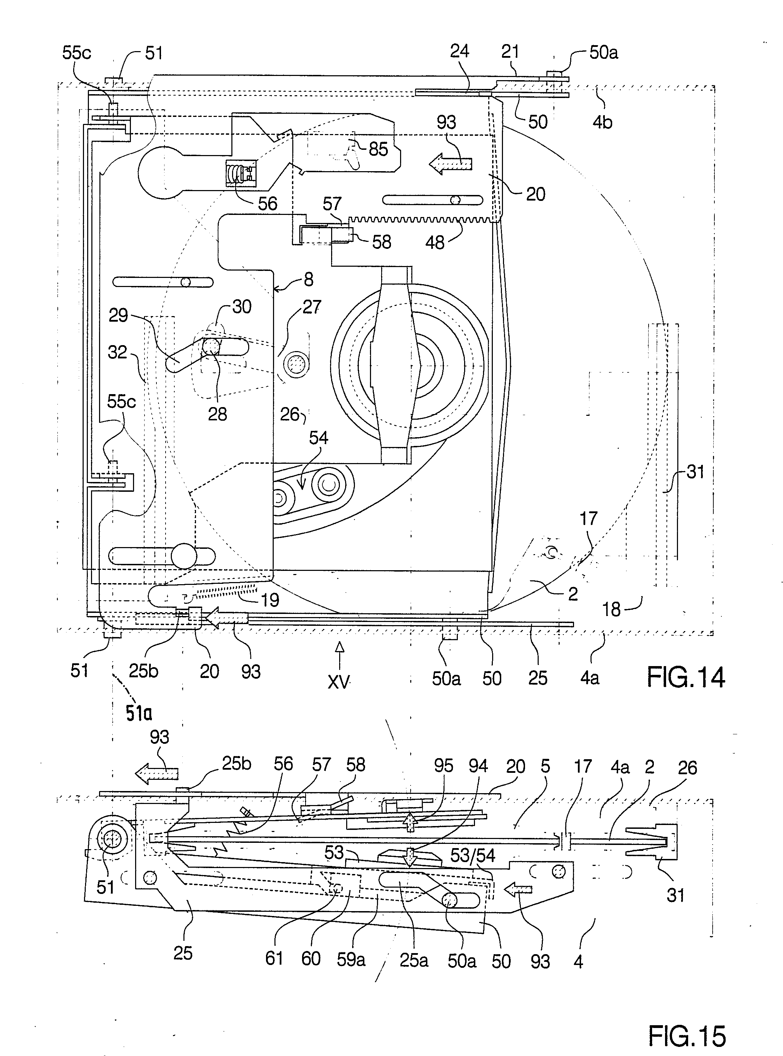

Fig. 14 und 15 zeigen, wie die Platte von der Baueinheit 53/54 und dem Plattenandrücker 55 wieder freigegeben wird. Der Fahrstift 50a läuft in dem Schrägteil der Kulisse 25a entlang, und das hat zur Folge, daß das Subchassis 15 und der Plattenandrücker 55 um die Achse 51a in Richtung der auseinanderlaufenden Pfeile 94, 95 auseinanderfahren. Der Fahrstift fährt zugleich in dem Schlitz 78 nach unten. Die Ansätze 57, 58 sind wieder aufeinander gelaufen, und der Plattenandrücker 55 wurde dementsprechend entgegen der Zugkraft der Feder 56 gemäß Pfeil 95 hochgedrückt. Nun liegt die Platte 2 in der V-förmigen Aufnahme zwischen Baueinheit 53/54 und dem Plattenandrücker 55 frei und wird nur noch am Rand gehalten.

Fig 16 und 16a zeigen einen Ausfahrstatus, in dem der Positionierschieber 20 in Richtung des Pfeiles 93 fast vollständig zurückgefahren ist. Der Ansatz 11a der Ladeschieberplatte befindet sich gerade auf der Abschrägung 23 des Positionierschiebers 20. Die Feder 75 drückt nun die gegeneinander verspannten Platten 11 und 12 in Auswurfrichtung gemäß Pfeil 96. Damit kommt das Zahnrad 39 des Antriebes 9 mit der Zahnstange 40 erneut in Eingriff. Dies ist vergrößert in Fig. 16a dargestellt. Durch das In-Eingriff-Bringen des Zahnrades 39 mit der Zahnstange 40 fährt de Mitnehmer 15 in Richtung des Pfeiles 96 nach außen, und er gibt den Ansatz 47 des Schwenkarmes 45 frei. Dieser Schwenkarm 45 schwenkt aufgrund der Kraft der Feder 77 gemäß Pfeil 97 von dem Zahnrad 39 weg, wodurch die Zahnräder 42, 43 und 44 nicht mehr angetrieben werden.

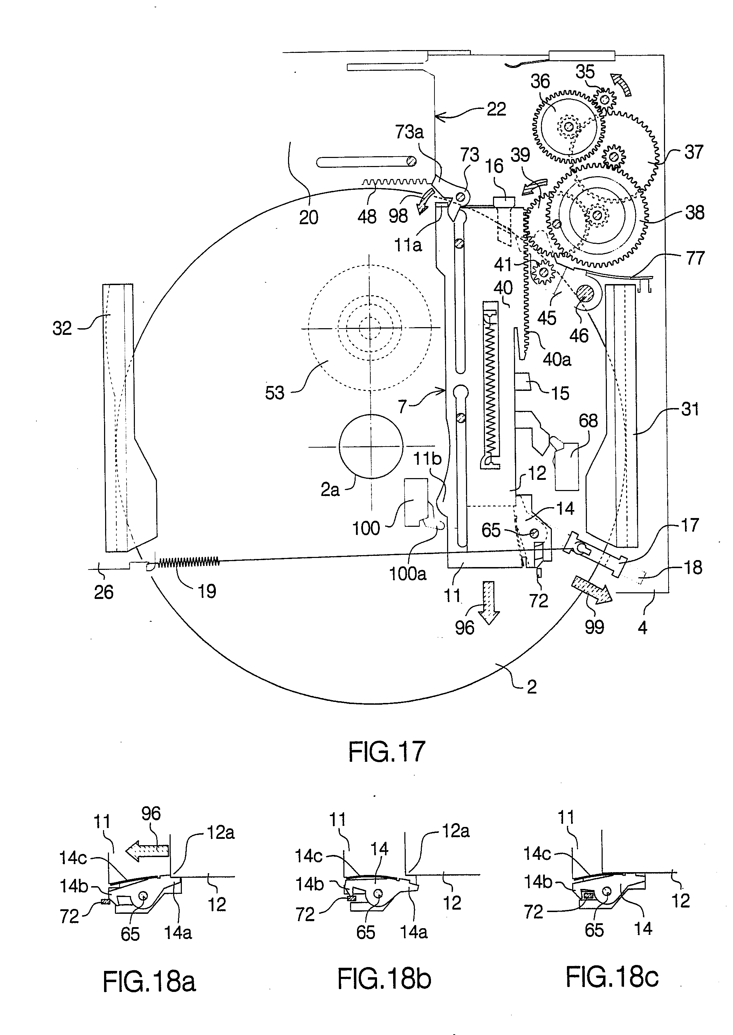

Fig. 17 zeigt einen weiteren Auswurfstatus, wobei die gegeneinander verspannten Platten 11 und 12 weiter ausgefahren sind. Der Ansatz 11a an der Ladeschieberplatte hat den Hebel 73 gemäß Pfeil 98 umgeworfen, und der Hebelarm 73a liegt nun wieder gegen den Positionierschieber 20, so daß dieser in seiner Endposition verriegelt ist. Die erste Anschlagnase 16 ist zwischenzeitlich wieder gegen den hinteren Rand der Platte 2 gestoßen und drückt die Platte gemäß Pfeil 96 in Auswurfrichtung heraus. Die zweite Anschlagnase 17 wird dabei entgegen der Zugkraft der Feder 19 nach außen gedrückt in Richtung des Pfeiles 99.

Die Platten 11 und 12 sind weiterhin gegeneinander verspannt mit Hilfe des Riegelelementes 14. Der Nocken 72 liegt noch vor dem Riegelelement 14.

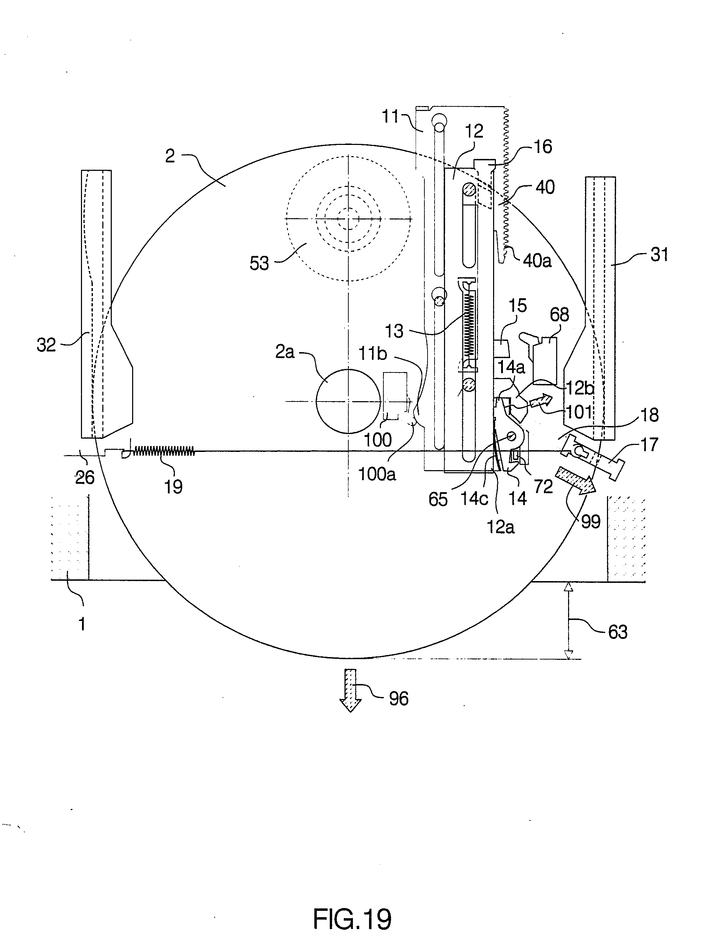

Die Ladeschieberplatte 11 weist einen Ansatz 11b auf, der mit einem Schalter 100 zusammenwirkt. In Fig. 17 ist dargestellt, daß der Ansatz 11b noch vor dem Schaltstift 100a des Schalters 100 liegt. Die Ladeschieberplatte läuft in Richtung des Pfeiles 96 noch ein Stück weiter. Bei dem letzten Bewegungsablauf wird das Riegelelement 14 verschwenkt, wie es aus den Fig. 17, 18a, 18b und 18c zu erkennen ist. Die Nase 14b des Riegelementes 14 stößt mit einer schrägen Vorderkante gegen den Nocken 72, und der Nocken wirft damit das Riegelelement 14 im Uhrzeigersinn entsprechend Pfeil 101 (Fig. 19) um. Die Nase 14b läuft dann an dem Nocken 72 vorbei und fällt hinter dem Nocken wieder aufgrund der Kraft der Feder 14c zurück (Fig. 18c).

Dadurch, daß die Rastecke 14a von der Ecke 12a freigekommen ist, wurden die Platten 11 und 12 entriegelt. Die Zugkraft der Feder 13 sorgt nun dafür, daß die Schieberreiterplatte 12 auf der Ladeschieberplatte 11 weiter nach vorn gefahren wird gemäß Pfeil 96, wobei die erste Anschlagnase die Platte von hinten auswirft in die Stellung nach Fig. 1, die bei dem Ausführungsbeispiel ca. 18 mm vor der Vorderkante des Gerätes liegt. In Fig. 19 ist dargestellt, daß der Ansatz 11b auf den Schaltstift 100a des Schalters 100 aufgelaufen ist und den Schaltstift 110a umgeworfen hat, wodurch der Antriebsmotor 33 ausgeschaltet worden ist. Die Platte kann nun wieder von Hand herausgenommen werden.

Obwohl das Gerät wegen seiner geringen Einbautiefe und Einbaubreite und Einbauhöhe besonders für den Einbau in Kraftfahrzeuge geeignet ist, eignet es sich selbstverständlich auch für stationäre Geräte oder andere mobile Anwendungen. Der zweistufige Ladevorgang ist außerordentlich zuverlässig, und die für das Laden und entladen benötigten Kräfte sind sehr gut ausgeglichen, so daß für einen Lademechanismus ein Antriebsmotor mit relativ geringer Antriebsleistung ausreicht.

## Ansprüche

1. Gerät zum Aufnehmen und/oder Wiedergeben von Signalen auf Informationsplatten (2) mit einem lichtoptischen Einschreibe-und/oder Ausleseaggregat (54), mit einem Drehteller (53) für die Informationsplatte (2), mit einem schwenkbar angeordneten Plattenandrücker (55) und einem Lademechanismus (6), um die Platte (2) in das Gerät (3) einzuschieben und in Betriebslage auf den Drehteller (53) zu führen und den Plattenandrücker (55) gegen die Platte (2) zu drücken, wobei das Aggregat (54), der Drehteller (53) und der Plattenandrücker (55) an einem Subchassis (50) angeordnet sind, das von einem Hauptchassis (4) getragen wird, dadurch gekennzeichnet, daß das Subchassis (50) mit Aggregat (54) und Drehteller (53) im Hauptchassis (4) um eine Schwenkachse (51a) schwenkbar ist, wobei die Schwenkachse (51a) etwa parallel zur Einschiebrichtung (10) verläuft und die Schwenkbewegung des Subchassis (50) von dem Lademechanismus (6) gesteuert wird.

2. Gerät nach Anspruch 1, dadurch gekennzeichnet, daß die Schwenkachsen (51) des Subchassis (50) und des Plattenandrückers (55) zusammenfallen.

3. Gerät nach Anspruch 1, dadurch gekennzeichnet, daß der Plattenandrücker (55) vom Subchassis (50) getragen wird.

4. Gerät nach Anspruch 3, dadurch gekennzeichnet, daß der Plattenandrücker (55) ein sich in der Einschieberichtung (10) erstreckendes Führungsgegenlager (32) für den Plattenrand aufweist, wobei sich das Führungsgegenlager (32) in der Nähe der Schwenkachse (51a) befindet.

5. Gerät nach Anspruch 1, dadurch gekennzeichnet, daß der Lademechanismus (6) eine Ladeschiebeeinrichtung (7) und eine Ladepositioniereinrichtung (8) aufweist, wobei die Ladeschiebeeinrichtung (7) für das Einschieben bzw. Auswerfen der Platte (2) parallel zur Einschieberichtung (10) arbeitet, während die Ladepositioniereinrichtung (8) quer zur Einschieberichtung (10) arbeitet.

6. Gerät nach Anspruch 5, dadurch gekennzeichnet, daß die Ladeschiebeeinrichtung (7) eine Ladeschieberplatte (11) aufweist, auf der in ihrer Längsrichtung eine Schieberreiterplatte (12) geführt ist.

7. Gerät nach Anspruch 6, dadurch gekennzeichnet, daß die Ladeschieberplatte (11) und die Schieberreiterplatte (12) in einer gegenseitig gegen Federkraft verschobenen Stellung verspannt verriegelbar sind mittels eines schwenkbaren Riegelelementes (14), das mittels Federkraft in die Riegelstellung gedrängt wird.

8. Gerät nach Anspruch 7, dadurch gekennzeichnet, daß an der Schieberreiterplatte (12) eine erste Anschlagnase (16) befestigt ist, über die beim Handeinschieben die Schieberreiterplatte (12) gegenüber der Ladeschieberplatte (11) verschiebbar ist bis zur Verriegelung mittels des Riegelelementes (14).

9. Gerät nach Anspruch 8, dadurch gekennzeichnet, daß die Platte (2) während ihres Einschiebens mit ihrem Rand zwischen dem Führungsgegenlager (32) an dem Plattenandrücker (55) und einer sich parallel gegenüber erstreckenden Plattenführung (31) geführt ist, wobei eine zweite Anschlagnase (17), die schräg zur Einschieberichtung (10) verschieblich ist, federbelastet nach dem Handeinschieben hinter die Platte (2) drückt und diese der nach hinten wegfahrenden ersten Anschlagnase (16) nachschiebt.

10. Gerät nach Anspruch 5, dadurch gekennzeichnet, daß der Lademechanismus (6) eine Antriebseinrichtung (9) aufweist, die entweder die Ladeschiebeeinrichtung (7) oder die Ladepositioniereinrichtung (8) antreibt.

11. Gerät nach Anspruch 10, dadurch gekennzeichnet, daß die Antriebseinrichtung (9) ein Zahnradgetriebe (34 bis 44, 48) mit einem von einem Schwenkarm (45) getragenen Kupplungszahnrad (41) aufweist, das gegen Ende der Platteneinschiebebewegung von einem Mitnehmer (15) an der Schieberreiterplatte (12) in eine Kupplungslage gedrängt wird, in der die Antriebseinrichtung mit einem Getriebe (42, 43, 44, 48) der Ladepositioniereinrichtung (8) kuppelt, wobei das Anstoßen nur stattfinden kann, wenn zuvor das Riegelelement (14) die Ladeschieberplatte (11) mit der Schieberreiterplatte (12) in gegeneinander verspannter Lage gekuppelt hat.

12. Gerät nach Anspruch 10, dadurch gekennzeichnet, daß dann, wenn die Ladepositioniereinrichtung (8) in Betrieb gesetzt wird, diese den Antrieb (40) der Ladeschiebeeinrichtung (7) in eine Freilaufstellung zur Antriebseinrichtung (9) überführt

13. Gerät nach Anspruch 5, dadurch gekennzeichnet, daß die Ladepositioniereinrichtung (8) einen Positionierschieber (20) aufweist, von dem Schwenkbewegungen der Baueinheit aus Drehteller (53) und Aggregat (54) einerseits und Plattenandrücker (55) andererseits derart gesteuert werden, daß diese von beiden Seiten gegen die eingeschobene Platte (2) geschwenkt werden.

14. Gerät nach Anspruch 13, dadurch gekennzeichnet, daß der Positionierschieber (20) auf einen Freigabeschieber (26) einwirkt, der dann, wenn die Baueinheit (53/54) und der Plattenandrücker (55) die Platte (2) positioniert und festgelegt haben, die Plattenführung (31) und die zweite Anschlagnase (17) von dem Plattenrand wegdrückt.

15. Gerät nach Anspruch 14, dadurch gekennzeichnet, daß die Baueinheit (53/54), die gegenüber dem Subchassis (50) federnd abgestützt ist, während des Ladevorganges und bei entnommener Platte (2) von quer zur Einschieberichtung (10) verschiebbaren Riegelschienen (59a, 59b) und einem Schwenkhebel (81) am Subchassis in allen Bewegungsrichtungen verriegelt gehalten ist.

16. Gerät nach Anspruch 15, dadurch gekennzeichnet, daß die Riegelschienen (59a, 59b) an dem Subchassis (50) verschieblich geführt sind und von dem Freigabeschieber (26) zeitlich etwa zusammen mit dem Wegdrücken von Plattenführung (31) und zweiter Anschlagnase (17) derart verschoben werden, daß die Baueinheit (53, 54) entriegelt wird.

17. Gerät nach Anspruch 16, dadurch gekennzeichnet, daß die Riegelschienen (59a, 59b) Riegelgabeln (60) aufweisen, in die in verriegelter Lage der Baueinheit (53/54) Stifte (61) der Baueinheit (53/54) greifen.

18. Gerät nach Anspruch 17, dadurch gekennzeichnet, daß der Freigabeschieber (26) vor seiner Freigabebewegung die Stifte (61) der Baueinheit (53/54) in den Riegelgabeln (60) blockiert.

19. Gerät nach Anspruch 18, dadurch gekennzeichnet, daß der Schwenkhebel (81) in der Riegelstellung eine Kraft auf die Baueinheit (53/54) ausübt und die Baueinheit (53/54) ihre Stifte (61) zum Blockieren in die Riegelgabeln eindrückt.

20. Gerät nach Anspruch 15, dadurch gekennzeichnet, daß zwischen Subchassis (50) und Baueinheit (53/54) eine federelastische Verbindung vorgesehen ist, die bei einer zur Horizontalen - schrägen Einbaulage in ein Kraftfahrzeug eine Gewichtskompensation herbeiführt, wobei die Federkräfte durch den Masseschwerpunkt der Baueinheit (53/54) verlaufen.

FIG.1

FIG.2

2-XII-PHD 86-210

FIG.3

FIG.4a

FIG.4b

FIG.4c

FIG.5

FIG.5a

4-XII-PHD 86-210

FIG.6

FIG.7

5-XII-PHD 86-210

FIG.8

FIG.9a

FIG.9

FIG.10

FIG.11a

FIG.11

7-XII-PHD 86-210

0 273 510

FIG.12

FIG.13a

FIG.13

8-XII-PHD 86-210

FIG.14

FIG.15

FIG.16

FIG.16a

10-XII-PHD 86-210

FIG.17

FIG.18a

FIG.18b

FIG.18c

FIG.19